# EUROPEAN PATENT SPECIFICATION

(11) **EP 0 808 762 B1**
(45) Date of publication and mention of the grant of the patent: **08.01.2003**
(21) Application number: 96902214.4
(22) Date of filing: 14.02.1996
(51) Int. Cl.: B62B 7/12, B62B 9/22, B62B 9/18

(54) **PERAMBULATOR**
KINDERWAGEN
VOITURE D'ENFANT

(30) Priority: 15.02.1995 CN 95111534
(43) Date of publication of application: 26.11.1997
(73) Proprietor: Jiangsu Goodbaby Group Corp., Kunsan City, Jiangsu 215331 (CN)
(72) Inventor: SONG, Zhenghuan, Kunsan City Jiangsu 215000 (CN)
(74) Representative: Siniscalco, Fabio
(86) International application number: CN9600015
(87) International publication number: WO96025316

(56) References cited:
- CN-Y- 2 172 740
- CN-Y- 2 201 312
- FR-A- 2 172 609
- US-A- 1 443 021
- US-A- 2 523 567
- US-A- 2 708 585
- US-A- 3 871 701
- US-A- 4 733 882

## Description

### TECHNICAL FIELD

The present invention relates to a kind of baby carriage.

### BACKGROUND OF THE INVENTION

In the prior art, a baby carriage generally consists of a frame, wheels disposed at the lower part of the frame, a hand-pushed bar used for pushing the carriage, and a cushioned seat mounting. In order to make the baby carriage have a function as a cradle, an arc-shaped or curved mounting is provided at the lower portion of the baby carriage frame. When the carriage is to be used as a cradle, the wheels are folded upward to make said arc-shaped or curved mounting land on the ground to rock the carriage. When the carriage is to be used as a hand-pushed baby carriage, the wheels shall be lowered and locked so that the curved mounting is in a suspended state. This kind of baby carriage, owing to the presence of a pair of curved mountings, entails a complicated manufacturing process and therefore results in an increased fabrication cost. Moreover, the changeover from a hand-pushed carriage to rocking carriage requires the raising or lowering of the wheels and brings inconveniences to the user.

### SUMMARY OF THE INVENTION

The object of the present invention is to provide a cradle type baby carriage with a simplified structure in which the curved mounting can be eliminated.

The technical scheme of the present invention is to provide a kind of cradle type baby carriage comprising a frame, wheels disposed at the lower portion of the frame, a hand-pushed bar joined to the frame and a seat supported on the front and rear of the frame by a fore rocker and a rear rocker, respectively. Such a carriage is known from US-A-2708585. The invention is distinguished from this prior art by the characterising features of claims 1.

A locking mechanism is optionally provided between the frame and the seat. By loosing said locking mechanism, the seat will be joined to the frame through the fore and rear rockers, and owing to the seat being in suspension on the fore and rear rockers, the seat can be rocked forward and backward to simulate the action of a cradle by locking said locking mechanism. The seat and the frame are locked to each other and the seat is unable to be rocked, then the present invention is used as a common hand-pushed baby carriage.

The present invention has advantages as follows:

The elimination of a curved mounting at the lower portion of the frame makes the baby carriage light, handy and flexible, resulting in a lower production cost.

A further description is made to the present invention in combination with an embodiment and with reference to the accompanying drawings as follows:

### BRIEF DESCRIPTION OF THE DRAWINGS

Figure 1 is a main structure diagram of the present invention;
Figure 2 is a view in the W direction in Figure 1 ( with the frame omitted);

### PREFERRED EMBODIMENTS OF THE INVENTION

In the drawings, reference numeral I designates a cross beam; 2 designates bracing diagonals; 3 designates folding connections; 4 designates rear legs; 5 designates fore legs; 6 designates connecting rods; 7 designates a seat; 8 designates a rear rocker; 9 designates a fore rocker; 10 designates wheels; 11 designates a cross beam rear hole; 12 designates a cross beam fore hole; 13 designates adjusting long slots; 14 designates a pivot; 15 designates a handle; 16 designates long slots; 17 designates moving handle; 18 designates locking rods; 19 designates a pivot; 20 designates a pushing handle.

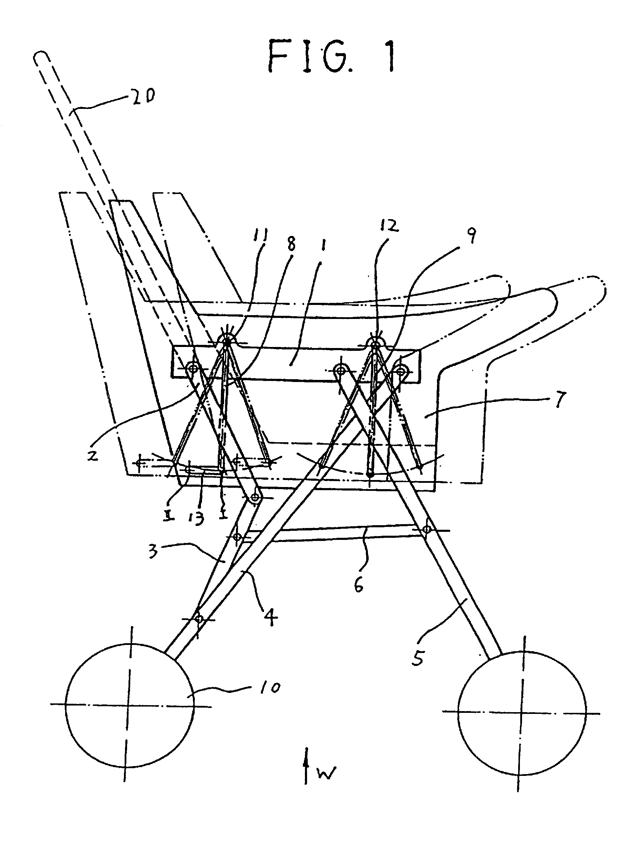

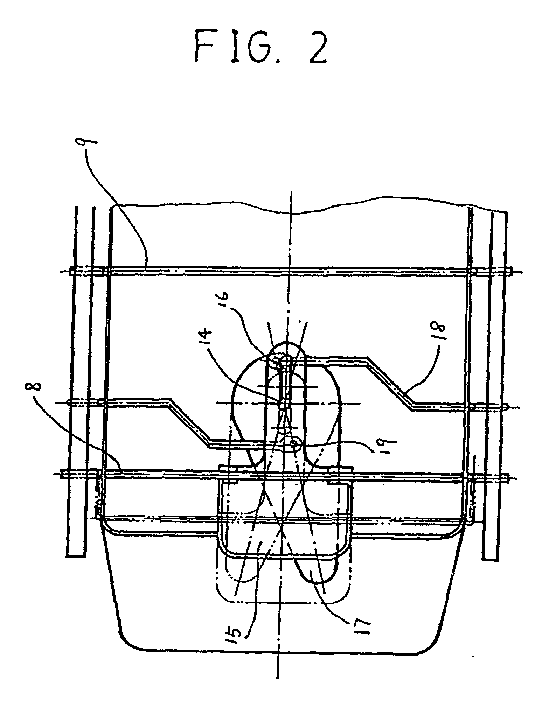

Referring to Figure 1, the frame is transversely symmetric and consists of cross beams 1, fore legs 5, connecting rods 6, rear legs 4, folding connections 3, bracing diagonals 2. The upper ends of said fore legs 5 and the rear legs 4 are movably joined to the fore portions of the cross beams 1. One end of the folding connections 3 is movably joined to the rear leg 4 and the other end is movably joined to the end portion of the bracing diagonal 2. The other end portion of the bracing diagonal is movably joined to the rear portion of the cross beam 1. One end of the connecting rod is movably joined to the fore legs 6 and the other end thereof is movably joined to the folding connections 3. The upper end portions of said fore legs 5 and rear legs 4 which are joined to the cross beams 1 in the mode as shown in Figure 1, can also be joined to the cross beams 1 with the end portion of the fore legs 5 in the front, and the end portion of the rear legs 4 in the rear. Furthermore, the end portions of the fore legs 5 and the rear legs 4 can also be hinged at the same position on the cross beams 1. Even the upper end portions of the fore legs 5 can be hinged to the upper portions of the rear legs 4, while the ends of the rear legs 4 are hinged to the cross beams 1, or the upper end portions of the fore legs 5 are hinged to the cross beams 1, while the upper portions of the rear legs 4 are hinged to the upper portions of the fore legs 5. The above-mentioned changeovers of position of the upper end portions of the fore legs 5 and the rear legs 4 all belong to an equivalent replacement. The wheels 10 are respectively disposed at the lower portions of the fore legs 5 and the rear legs 4. The hand-pushed bar 20 is joined to the bracing diagonals 2. The fore rocker 9 and the rear rocker 8 are hinged respectively on the cross beams 1 of the frame through the cross beam fore hole 12 and the cross beam rear hole 11. Other modes of movable joining are also possible. For instance, the upper portion of the rear rocker 8 or fore rocker 9 is again hinged to the end of a section of the connecting rod. The upper end portion of the connecting rod is again hinged to the cross beam 1. On the exterior of the cross beams 1 is provided a protecting hood which is used to cover the hinges of the cross beams to ensure the safety of the baby on the seat 7. In the front and rear of the frame are respectively hinged the fore rocker 9 and the rear rocker 8. The lower ends of said fore rocker 9 and rear rocker 8 are respectively movably joined to the bottom portion or the lower portion of the seat 7. The state of the seat 7 when being able to be rocked forward and backward, is shown by double dotted lines in Figure 1. At the lower end portions of said fore rocker 9 and rear rocker 8 is provided a distance adjusting device. Generally, the fore and rear rockers are parallel to each other, and the seat 7 makes a horizontal rocking motion. By lengthening the distance between the lower end portions of the fore rocker 9 and rear rocker 8, the fore and rear rockers will be in the shape of a trapezoid which enables the seat 7 to change from horizontal rocking to an approximate pendulum type swinging. Said distance adjustment is made possible by a long adjusting slot 13 in the forward and backward direction provided at the bottom portion or lower portion of the rear end of said seat 7 for the back and forth sliding of the rear rocker 8. The lower end of the rear rocker 8 passing through the long adjusting slot 13 is used to support the rear portion of the seat 7. The lower end of the fore rocker 9, movably joined ( for instance , by a hinge joint used in Figure 1) to the bottom portion or lower bottom portion of the front end of the seat 7, is used to support the front portion of the seat 7. The backward and forward sliding of the lower portion of the rear rocker 8 in the long adjusting slot 13 can adjust the distance of the lower portions of the fore and rear rockers. The long adjusting slot can also be provided on the seat 7 at both lower portions of the fore rocker 9 and rear rocker 8 to simultaneously adjust the distance of the lower portions of the fore rocker 9 and rear rocker 8. For the details of this kind of distance adjusting device, please refer to the disclosure of Chinese Utility Model Application No. "94242511.1" filed before and published after the priority date of the present application. Said distance adjusting device can also be provided at the upper ends of the fore rocker and the rear rocker for adjusting the distance of the upper end portions of the fore and rear rockers. This kind of distance adjusting device for adjusting the upper end portions and the aforementioned distance adjusting device for adjusting the lower end portions is a kind of equivalent replacement which results in the same effect. Referring to Figure 2, at the bottom portion of said seat 7 is provided a push-and-pull handle 15. The rear portion of the push-and-pull handle 15 is joined to the rear rocker 8. The fore portion of the push-and-pull handle 15 is movably joined on the pivot 14 of the bottom of the seat 7. Pushing and pulling of the handle 15 can make the rear rocker 8 slide in the adjusting long slot 13 and make the rear rocker 8locate respectively at the position I or position II in Figure 1, thereby further adjusting the distance of the lower end portions of the fore and rear rockers. When the push-and-pull handle 15 moves back and forth, the push-and-pull handle is also required to move relative to the pivot 14, therefore a long slot 16 is made on the push-and-pull handle at the junction of said push-and-pull handle 15 and the pivot 14 for the pivot 14 to be able to slide in the forward and backward direction. The pivot 14 passes through that long slot 16 to join the handle 15. In order to make the rear rocker 8 relatively stable in position in the long adjusting slot 13, a damping device is provided between the pivot 14 and the slot wall of the long slot 16, namely the slot width at both end portions of the long slot 16 is slightly larger than the diameter of the pivot 14, while the slot width in the middle portion of the long slot 16 is slightly less than the diameter of the pivot 14. A parallel stripe slot is provided adjacent to the long slot 16 to make the slot wall of long slot 16 have elasticity. The elasticity of the wall of the long slot 16 wall is utilized to tightly press the pivot 14 and to prevent it from sliding during the rocking of the seat 7. That damping device can also be provided in the long adjusting slot 13. A locking device is provided between said seat 7 and the frame, namely a locking rod moving handle 17 is also joined to said pivot 14 and which handle is able to swivel around said pivot 14. Two transverse locking rods 18 are hinged respectively on the locking rod moving handle 17 along the fore and rear positions of the pivot 14. The outer end point of these two locking rods are aligned with the locating holes on the two sides of the frame. The lateral moving of that locking rod moving handle 17 can insert the locking rods 18 into or pull them out of said locating holes, thereby making the seat 7 to be locked or relieved of locking state relative to the frame.

## Claims

1. A kind of cradle type baby carriage comprising a frame, wheels (10) disposed at the lower portion of the frame, a hand-pushed bar (20) joined to the frame and a seat (7) supported on the front and rear of the frame by a fore rocker (9) and a rear rocker (8), respectively, **characterised in that** each upper and/or lower end portions of said fore (9) and rear (8) rockers is selectively stationarily joined to or slidingly movably joined to the lower portion of the seat (7) or to the frame for adjusting the distance between said upper and/or lower end portions of said fore (9) and rear (8) rockers.

2. The cradle type baby carriage according to Claim 1, comprising a long adjusting slot (13) provided at the lower portion of the rear end of said seat (7) in the forward and backward direction for the back and forth sliding of the rear rocker (8), the lower end of the rear rocker (8) passes through that long adjusting slot (13) to support the rear portion of the seat (7), the lower end of the fore rocker (9) is movably joined to the lower portion of the fore end of the seat (7) to support the fore portion of the seat (7).

3. The cradle type baby carriage according to Claim 2, **characterized in that** a push-and-pull handle (15) is provided at the bottom portion of said seat (7), the rear portion of said push-and-pull handle (15) is joined to the rear rocker (8), the fore portion of said push-and-pull handle (15) is movably joined to a pivot (14) of the bottom portion of the seat (7).

4. The cradle type baby carriage according to Claim 3, **characterized in that** on the push-pull handle at the junction of said push-and-pull handle (15) and pivot (14) is made a long slot (16) in the forward and backward direction for the pivot (14) to slide, the pivot (14) passes that long slot (16) to join the push-and-pull handle (15), a damping device is provided between the pivot (14) and the wall of the long slot (16).

5. The cradle type baby carriage according to Claim 4, **characterized in that** the slot width at both end portions of said long slot (16) is slightly larger than the diameter of the pivot(14), while the slot width in the middle portion of the long slot (16) is slightly less than the diameter of the pivot (14), and a parallel stripe slot is provided adjacent to the long slot (16) to make the slot wall of the long slot (16) have elasticity.

6. The cradle type baby carriage according to Claim 1, **characterized in that** a locking device is provided between said seat (7) and the frame.

7. The cradle type baby carriage according to Claim 3 or 6, **characterized in that** said pivot (14) is also joined to a locking rod moving handle (17) which is able to swivel around that pivot (14), on the locking rod moving handle in the front and rear of the pivot (14) are hinged two transverse locking rods (18), the outer end points of those two locking rods (18) are aligned with the locating holes on the two sides of the frame.

8. The cradle type baby carriage according to Claim 1, **characterized in that** both said fore rocker (9) and rear rocker (8) are hinged on the cross beams (1) of the frame and a protecting hood is provided on the exterior of the cross beam (1).

9. Said cradle type baby carriage according to claim 1, **characterized in that** said frame consists of cross beams (1), fore legs (5), connecting rods (6), rear legs (4), folding connections (3), bracing diagonals (2), the upper ends of said fore legs (5) are movably joined to the fore portions of the cross beams (1), the upper ends of the rear legs (4) are movably joined to the fore portions of the cross beams (1), one end of the folding connections (3) is movably joined to the rear legs (4), the other end thereof is movably joined to the end portion of the bracing diagonals (2), and the other end of the bracing diagonals is movably joined to the rear portion of the cross beams (1), one end of the connecting rods (6) is movably joined to the fore legs (5), while the other end is movably joined to the folding connections (3).

## Patentansprüche

1. Ein wiegenartiger Kinderwagen umfassend einen Rahmen, Räder, (10) angeordnet an tieferen Teilen des Rahmens, eine Handschiebestange (20), die mit dem Rahmen verbunden ist, und einen Sitz (7), gehalten an der Vorderseite und der Rückseite des Rahmens durch eine vordere Schwinge (9) bzw. eine hintere Schwinge (8), **dadurch gekennzeichnet, daß** jeder obere und/oder untere Endabschnitt der genannten vorderen (9) und hinteren (8) Schwingen einzeln fest verbunden oder gleitend bewegbar verbunden ist mit dem unteren Abschnitt des Sitzes (7) oder mit dem Rahmen, um die Distanz zwischen den genannten oberen und/oder unteren Endabschnitten der genannten vorderen (9) und hinteren (8) Schwingen einzustellen.

2. Der wiegenartige Kinderwagen nach Anspruch 1, umfassend eine lange Einstellnut (13), die an dem unteren Abschnitt des hinteren Endes des genannten Sitzes (7) in Vorwärts- und Rückwärtsrichtung vorgesehen ist zum Rückwärts- und Vorwärtsgleiten der hinteren Schwinge (8), wobei das untere Ende der hinteren Schwinge (8) durch die lange Einstellnut (13) tritt, um den hinteren Abschnitt des genannten Sitzes (7) zu unterstützen, und das untere Ende der vorderen Schwinge (9) beweglich mit dem unteren Abschnitt des Vorderendes des Sitzes (7) verbunden ist, um den vorderen Abschnitt des Sitzes (7) zu unterstützen.

3. Der wiegenartige Kinderwagen nach Anspruch 2, **dadurch gekennzeichnet, daß** ein Handgriff (15) zum Schieben und Ziehen am Bodenabschnitt des genannten Sitzes (7) vorgesehen ist und der hintere Abschnitt des genannten Handgriffs (15) zum Schieben und Ziehen mit der hinteren Schwinge (8) verbunden ist, wobei der vordere Abschnitt des genannten Handgriffes (15) zum Schieben und Ziehen beweglich mit einem Achszapfen (14) des Bodenabschnittes des Sitzes (7) verbunden ist.

4. Der wiegenartige Kinderwagen nach Anspruch 3, **dadurch gekennzeichnet, daß** an dem Handgriff zum Schieben und Ziehen an der Verbindung des genannten Handgriffs (15) zum Schieben und Ziehen und dem Achszapfen (14) eine lange Nut (16) in der Vorwärts- und Rückwärtsrichtung für den Achszapfen (14) vorgesehen ist, um zu gleiten, und der Achszapfen (14) durchtritt diese lange Nut (16), um sich mit dem Handgriff (15) zum Schieben und Ziehen zu verbinden, wobei eine Dämpfungsvorrichtung zwischen dem Achszapfen (14) und der Wand der langen Nut (16) vorgesehen ist.

5. Der wiegenartige Kinderwagen nach Anspruch 4, **dadurch gekennzeichnet, daß** die Nutbreite an beiden Endabschnitten der genannten langen Nut (16) etwas größer ist als der Durchmesser des Achszapfens (14), während die Nutbreite im Mittelabschnitt der langen Nut (16) etwas geringer ist als der Durchmesser des Achszapfens (14), und eine parallele, an die lange Nut (16) angrenzende Streifennut vorgesehen ist, um der Nutwand der langen Nut (16) Elastizität zu verleihen.

6. Der wiegenartige Kinderwagen nach Anspruch 1, **dadurch gekennzeichnet, daß** eine Arretiervorrichtung zwischen dem genannten Sitz (7) und dem Rahmen vorgesehen ist.

7. Der wiegenartige Kinderwagen nach Anspruch 3 oder 6, **dadurch gekennzeichnet, daß** der Achszapfen (14) auch mit einem Verriegelungszapfenhandgriff (17), welcher um den Achszapfen (14) schwenkbar ist, verbunden ist, wobei an dem Verriegelungszapfenhandgriff an der Vorderseite und der Rückseite des Achszapfens (14) zwei transverse Verriegelungsbolzen (18) drehbar angebracht sind, wobei die äußeren Endpunkte dieser beiden Verriegelungsbolzen (18) mit den Aufnahmebohrungen an den beiden Seiten des Rahmens ausgerichtet sind.

8. Der wiegenartige Kinderwagen nach Anspruch 1, **dadurch gekennzeichnet, daß** sowohl die genannte vordere Schwinge (9) als auch die hintere Schwinge (8) mit dem Querträger (1) des Rahmens schwenkbar verbunden sind und eine Schutzkappe am Äußeren des Querträgers (1) vorgesehen ist.

9. Der genannte wiegenartige Kinderwagen nach Anspruch 1, **dadurch gekennzeichnet, daß** der Rahmen aus Querträgern (1), vorderen Beinen (5), verbindenden Stangen (6), hinteren Beinen (4), Faltverbindungen (3), Diagonalverstrebungen (2) besteht, wobei die oberen Enden der genannten vorderen Beine (5) beweglich mit dem vorderen Abschnitt der Querträger (1) verbunden sind und die oberen Enden der hinteren Beine (4) mit den vorderen Abschnitten der Querträger (1) beweglich verbunden sind, und ein Ende der Faltverbindungen (3) ist mit den hinteren Beinen (4) beweglich verbunden, und das andere Ende davon ist mit dem Endabschnitt der Diagonalverstrebungen (2) beweglich verbunden, und das andere Ende der Diagonalverstrebungen ist mit dem hinteren Abschnitt der Querträger (1) beweglich verbunden, und ein Ende der verbindenden Stangen (6) ist mit den vorderen Beinen (5) beweglich verbunden, während das andere Ende mit den Faltverbindungen (3) beweglich verbunden ist.

## Revendications

1. Landau comprenant un châssis, des roues (10) placées à la partie inférieure du châssis, une barre (20) de poussée manuelle raccordée au châssis, et un siège (7) supporté par l'avant et l'arriére du châssis par un organe basculant avant (9) et un organe basculant arrière (8) respectivement, **caractérisé en ce que** chacune des parties supérieure et/ou inférieure d'extrémité des organes basculants avant (9) et arrière (8) est raccordée sélectivement de manière fixe ou de façon mobile coulissante à la partie inférieure du siège (7) et au châssis pour l'ajustement de la distance comprise entre les parties supérieure et/ou inférieure d'extrémité des organes basculants avant (9) et arrière (8).

2. Landau selon la revendication 1, comprenant une longue fente d'ajustement (13) placée à la partie inférieure de l'extrémité arrière du siège (7) dans la direction avant-arrière pour le coulissement avant-arrière de l'organe basculant arrière (8), l'extrémité inférieure de l'organe basculant arrière (8) passe dans la longue fente d'ajustement (13) pour supporter la partie arrière du siège (7), et l'extrémité inférieure de l'organe basculant avant (9) est raccordée de façon mobile à la partie inférieure de l'extrémité avant du siège (7) pour supporter la partie avant du siège (7).

3. Landau selon la revendication 2, **caractérisé en ce qu'**une poignée (15) de poussée-traction est disposée à la partie inférieure du siège (7), la partie arrière de la poignée de poussée-traction (15) est raccordée à l'organe basculant arrière (8), et la partie avant de la poignée de poussée-traction (15) est raccordée de façon mobile à un pivot (14) de la partie inférieure du siège (7).

4. Landau selon la revendication 3, **caractérisé en ce que**, sur la poignée de poussée-traction au raccord de la poignée de poussée-traction (15) et du pivot (14), est disposée une longue fente (16) de direction avant-arrière pour le coulissement du pivot (14), le pivot (14) passe dans la longue fente (16) pour se raccorder à la poignée de poussée-traction (15), et un dispositif d'amortissement est placé entre le pivot (14) et la paroi de la longue fente (16).

5. Landau selon la revendication 4, **caractérisé en ce que** la largeur de la fente aux deux parties d'extrémité de la longue fente (16) est légèrement supérieure au diamètre du pivot (14), alors que la largeur de la fente dans la partie médiane de la longue fente (16) est légèrement inférieure au diamètre du pivot (14), et une fente parallèle est disposée près de la longue fente (16) pour que la paroi de la longue fente (16) présente une élasticité.

6. Landau selon la revendication 1, **caractérisé en ce qu'**un dispositif de blocage est placé entre le siège (7) et le châssis.

7. Landau selon la revendication 3 ou 6, **caractérisé en ce que** le pivot (14) est aussi raccordé à une poignée (17) de déplacement de tige de blocage qui peut pivoter autour du pivot (14), deux tiges transversales de blocage (18) sont articulées sur la poignée de déplacement de la tige de blocage à l'avant et à l'arrière du pivot (14), et les points d'extrémité externe de ces deux tiges de blocage (18) sont alignés sur les trous de positionnement placés des deux côtés du châssis.

8. Landau selon la revendication 1, **caractérisé en ce que** l'organe basculant avant (9) et l'organe basculant arrière (8) sont articulés sur les traverses (1) du châssis, et un capot protecteur est placé à l'extérieur de la traverse (1).

9. Landau selon la revendication 1, **caractérisé en ce que** le châssis est formé de traverses (1), de pieds avant (5), de tiges de raccordement (6), de pieds arrière (4), de raccords pliants (3), et d'entretoises diagonales (2), les extrémités supérieures des pieds avant (5) sont raccordés de façon mobile aux parties avant des traverses (1), les extrémités supérieures des pieds arrière (4) sont raccordés de façon mobile aux parties avant des traverses (1), une première extrémité des raccords pliants (3) est raccordée de façon mobile aux pieds arrière (4), leur autre extrémité est raccordée de façon mobile à la partie d'extrémité des entretoises diagonales (2), et les autres extrémités des entretoises diagonales sont raccordées de façon mobile à la partie arrière des traverses (1), et une première extrémité des tiges de raccordement (6) est raccordée de façon mobile aux pieds avant (5) alors que l'autre extrémité est raccordée de façon mobile aux raccords pliants (3).
